# EUROPÄISCHE PATENTSCHRIFT

(11) **EP 1 308 642 B1**
(45) Veröffentlichungstag und Bekanntmachung des Hinweises auf die Patenterteilung: **15.08.2007**
(21) Anmeldenummer: 02450227.0
(22) Anmeldetag: 08.10.2002
(51) Int. Cl.: F16D 3/72

(54) **Hohlwelle**
Hollow shaft
Arbre tubulaire

(30) Priorität: 31.10.2001 AT 17272001
(43) Veröffentlichungstag der Anmeldung: 07.05.2003
(73) Patentinhaber: Siemens Transportation Systems GmbH & Co KG, 1110 Wien (AT)
(72) Erfinder: Teichmann, Martin, 8010 Graz (AT)
(74) Vertreter: Matschnig, Franz

(56) Entgegenhaltungen:
- EP-A- 0 145 810
- EP-A- 0 943 827
- DE-A- 3 139 247
- DE-A- 10 022 663
- US-A- 5 836 825

## Beschreibung

Die Erfindung betrifft eine Antriebswelle entsprechend dem Oberbegriff des Anspruchs 1.

Zur Übertragung von Drehmomenten auf die Räder eines Fahrzeuges werden Antriebswellen verwendet, welche einen beispielsweise in einem Drehgestellt oder Fahrzeugkasten montierten Antrieb entsprechend mit den Rädern verbinden. Allerdings muss diese Kupplung Bewegungen zwischen dem Rad und dem Antrieb zulassen.

Momentan werden dazu verschiedene Lösungen eingesetzt. Bei Hochleistungslokomotiven und teilweise auch U-Bahnen verwendet man Kardanhohlwellen mit Lenkersternen als Kardangelenken. Bei Triebzügen und S-Bahnen werden die Bewegungen zwischen Antrieb und Rädern mittels Bogenzahn- und ähnlichen Kupplungen aufgenommen.

Nachteilig an diesen Lösungen ist allerdings neben dem relativ hohen Gewicht dieser Antriebswellen, dass eine Reihe ermüdungsanfälliger, bewegter Teile und auch ermüdungsanfällige Gummiteile verwendet werden müssen.

Flexible Wellen sind hinlänglich bekannt, etwa bei angetriebenen Handwerkzeugen, Drehzahlgebern, etc. Beispielsweise ist in der DE 31 43 194 A1 eine flexible Hohlwelle wie eingangs erwähnt geoffenbart, deren Rohrwand aus einem biegsamen Material gebildet ist, welches zusätzlich mit Fasern wie etwa Carbonfasern verstärkt ist. Nachteilig an dieser Hohlwelle ist allerdings, dass diese eine weitestgehend homogene Struktur aufweist. Diese Struktur bedingt allerdings, dass eine hohe Flexibilität der Welle nur bei einem relativ geringen Innendurchmesser der Welle gegeben ist. In einem solchen Fall können allerdings nur geringe Drehmomente übertragen werden, die Übertragung höherer Drehmomente führt zu einer Beschädigung oder Zerstörung der Welle. Wird hingegen der Innendurchmesser entsprechend der Übertragung hoher Drehmomente ausgebildet, geht die Flexibilität der Struktur und damit ein wesentlicher Vorteil einer solchen Welle verloren.

Die in der DE 31 43 194 A1 gezeigte Hohlwelle eignet sich vor allem zum Antrieb von schnell laufenden Maschinen, wie etwa Kraftfahrzeugen, Bohrmaschinen, etc., wo nur geringe Drehmomente zu übertragen sind. Für die Übertragung hoher Drehmomente, wie sie etwa bei der Verwendung in Antriebsfahrzeugen im Schienenverkehr notwendig ist, ist allerdings eine nach dem in der DE 31 43 194 A1 gezeigten Prinzip aufgebaute Welle nicht geeignet, da wie oben erwähnt aufgrund der homogenen Struktur bei einer ausreichend hohen Flexibilität der Innendurchmesser der Welle nur relativ gering sein kann.

Um eine möglichst leichte und kostengünstig herzustellende flexible Hohlwelle zu schaffen, welche die Übertragung hoher Drehmomente erlaubt und andererseits eine relativ große Bewegungen zwischen Rädern und Antrieb oder zwischen Antrieb und Getriebe möglich macht, ist weiters die rohrförmige Wandung aus Faserbündeln gebildet, welche in Bahnen verlaufen, die in einem Abstand um die Längsachse der Welle herum verlaufen, wobei die Bahnen unter einem Winkel gegen die Längsachse geneigt sind, benachbarte Bahnen mit gleichem Umlaufsinn in einer im wesentlichen zu der Längsachse parallelen Richtung einen Abstand zueinander aufweisen, und sich Bahnen mit verschiedenem Umlaufsinn in Kreuzungspunkten überschneiden.

Eine solche Welle ist z.B. aus der DE 100 22 663 A bekannt.

Durch die Bildung der Wandung der Welle lediglich quer verlaufenden Faserbündel wird eine leichte Welle geschaffen, die eine hohe Torsionssteifigkeit aufweist, sodass sich hohe Drehmomente übertragen lassen. Andererseits wird durch die Anordnung der Faserbündel eine offene Struktur geschaffen, eine geringe Biegesteifigkeit und auch eine geringe Steifigkeit in Längsrichtung erzielt, sodass ohne zusätzliche bewegliche Bauteile die beiden Enden der Welle, welche entsprechend mit dem Antrieb, Getriebe, Rädern etc. verbunden sind, große Relativbewegungen zueinander ausführen können. Durch die offene Struktur ist eine ausreichende Flexibilität auch bei einem relativ großen Innendurchmesser der Welle noch gegeben.

Es ist eine Aufgabe der Erfindung, eine solche Welle dahingehend zu verbessern, dass eine hohe Stabilität der Welle zur Übertragung hoher Drehmomente erreicht wird, ohne dass dadurch die Flexibilität der Welle leidet.

Diese Aufgabe wird mit einer eingangs erwähnten Welle dadurch gelöst, dass sie erfindungsgemäß die Merkmale des Kennzeichens des Anspruchs 1 aufweist.

Grundsätzlich ist bei einer einfachen Ausführungsform der Welle vorgesehen, dass die Winkel der Bahnen für die Faserbündel zumindest Großteils unter im wesentlichen unveränderten Winkeln verlaufen. Hinsichtlich der besseren Anpassbarkeit der Welle an auftretende Belastungen kann es aber zweckmäßig sei, wenn der Winkel zu der Längsachse bei einem Fortschreiten entlang der Bahnen unterschiedliche Werte aufweist.

Besonders hohe Flexibilität und Torsionssteifigkeit lässt sich erreichen, wenn die Bahnen der Faserbündel unter einem Winkel von 40 ° - 80 ° gegen die Längsachse der Welle verlaufen.

In obigem Sinne ist es auch, wenn für unterschiedliche Positionen entlang der Längsachse die Abstände zwischen benachbarten Bahnen unterschiedliche Werte annehmen.

Bei einer konkreten Ausführungsform verlaufen die Faserbündel im wesentlichen spiralförmig.

Es kann aber auch vorgesehen sein, dass die Faserbündel in sich geschlossen sind, und etwa einen elliptischen Querschnitt umschließen.

Bei einer spiralförmigen Anordnung kann es für eine einfache Herstellung günstig sein, wenn entsprechend lange Faserbündel verwendet werden, sodass die Faserbündel durchgehend von einem zum anderen Ende der Welle verlaufen.

Vorzugsweise sind die Faserbündel miteinander verklebt. Dies stellt eine einfache und gewichtsoptimierte Vorgangsweise zur Verbindung der Faserbündel dar. Bei einer konkreten Ausführungsform sind die Faserbündel mit einem Harz miteinander verklebt. Zug- und Druckkräfte werden in diesen Verklebungspunkten aufgenommen, sodass die entsprechende Belastung der Faserbündel gering gehalten werden kann.

Hinsichtlich hoher Torsionssteifigkeit bei hoher Flexibilität hat es sich als günstig herausgestellt, wenn sich in den Kreuzungspunkten kreuzende Faserbündel unter einem Winkel von 10°-90° überschneiden.

Für bestimmte Einsatzzwecke, etwa bei einem Auffädeln der Welle auf einer Radsatzwelle ist es günstig, wenn sie zumindest zu einem Ende hin verlaufend einen sich vergrößernden Durchmesser aufweist, wie weiter unten noch kurz erläutert.

Zusätzlich zu den quer verlaufenden Faserbündeln kann es auch noch zweckmäßig sein, wenn ringförmige Faserbündel vorgesehen sind, d. h. Bündel, die in sich geschlossen sind und einen kreisförmigen Querschnitt aufweisen. Auf diese Weise kann man die Längssteifigkeit der Welle punktuell erhöhen.

Mit der erfindungsgemäßen Welle können Drehmomente ohne Kupplungen zwischen Motor und Getriebe übernommen werden. Eine solche Kupplung ist aus dem Grund nicht notwendig, da die vorgestellte Welle sowohl in Richtung quer zu ihrer Längsachse als auch in Richtung der Längsachse flexibel, d. h. federnd ausgebildet ist, und somit Relativbewegung etwa zwischen Motor und Getriebe oder Motor und Rad ausgeglichen werden können.

Zum Anschluss der Welle an die entsprechenden Teile, wie Motor, Rad, Getriebe, etc. sind die Faserbündel in den beiden Endbereichen der Welle mit je einem Anschlussstück zur Verbindung mit einer Restmechanik verbunden.

Besonders hohe Stabilität ist gegeben, wenn die Anschlusstücke als Metallringe ausgebildet sind.

Beispielsweise sind die Anschlussstücke mit den Fasernbündeln verklebt, wodurch auch eine einfache Herstellung der erfindungsgemäßen Welle erlaubt ist.

Es kann aber in einer gewichtsoptimierten Ausführungsform auch vorgesehen sein, dass die Faserbündel am jeweiligen Ende so geformt sind, dass diese das Anschlussstück bilden.

Die gewünschten Anforderungen an die Antriebswelle können im Rahmen der Erfindung erreicht werden, wenn die Faserbündel aus Carbonfasern und/oder Glasfasern und/oder Kevlarfasern gebildet sind.

Die Fasernbündel sind dabei aus 10²-10⁵ Fasern gebildet, um den auftretenden Zug-, Druck- und Torsionsbelastungen Stand zu halten. Allerdings ist zu betonen, dass die Dimensionierung stark auslegungs- und werkstoffabhängig ist, sodass auch andere Faserzahlen auftreten können.

Auftretende Zug- und Druckkräfte müssen damit in einem Kreuzungspunkt auch nicht in nur einem Verklebungspunkt aufgenommen werden, sondern es liegt dann eine ganze Reihe von miteinander verklebten Faserbündeln in diesem einen Bereich vor, sodass die dort auftretenden Belastungen gleichmäßig verteilt werden.

Üblicherweise handelt es dabei um 10¹ - 10³ Schichten, wobei diese Zahl wiederum belastungsabhängig gewählt wird.

Zum Schutz der Welle vor mechanischen Beschädigungen, etwa durch Steinschlag etc., ist sie zumindest bereichsweise von einer flexiblen Verkleidung umgeben, wobei die Verkleidung im wesentlichen die Gestalt der Welle besitzt.

Beispielsweise ist die Verkleidung ein Gummiüberzug. Mit einem solchen Überzug werden auch Geräuschbelästigungen, die sich durch die offene Struktur der Welle ergeben, wenn diese mit hoher Drehgeschwindigkeit rotiert, minimiert oder vollständig unterdrückt.

Im folgenden ist die Erfindung an Hand der Zeichnung näher erläutert. In dieser zeigen
- Fig. 1: eine perspektivische Ansicht einer erfindungsgemäßen Welle,
- Fig. 2: eine Vorderansicht einer Welle,
- Fig. 3: eine Seitenansicht der Welle, und
- Fig. 4: eine beispielhafte Darstellung der Anordnung von Faserbündeln bei einer Welle nach der Erfindung.

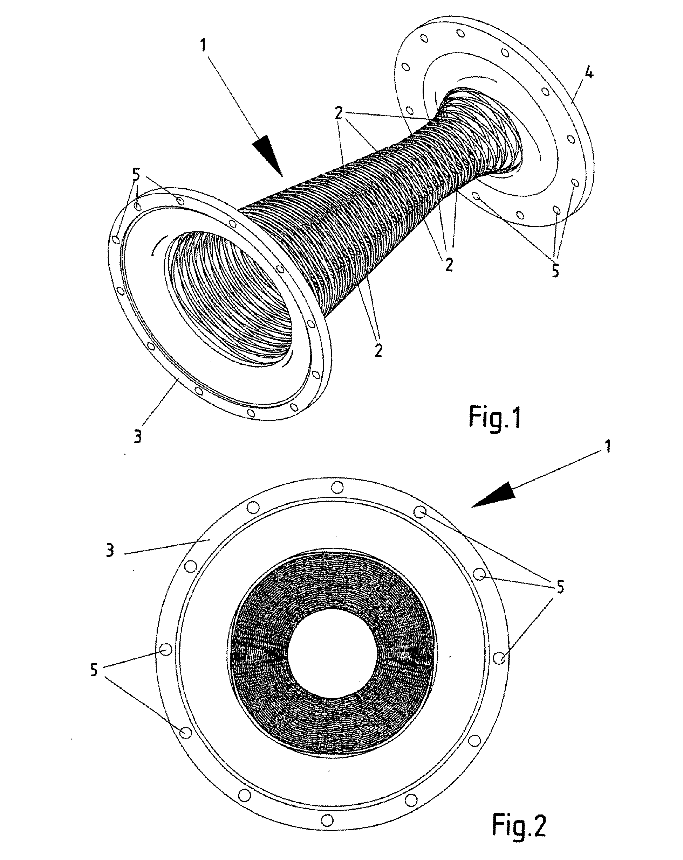

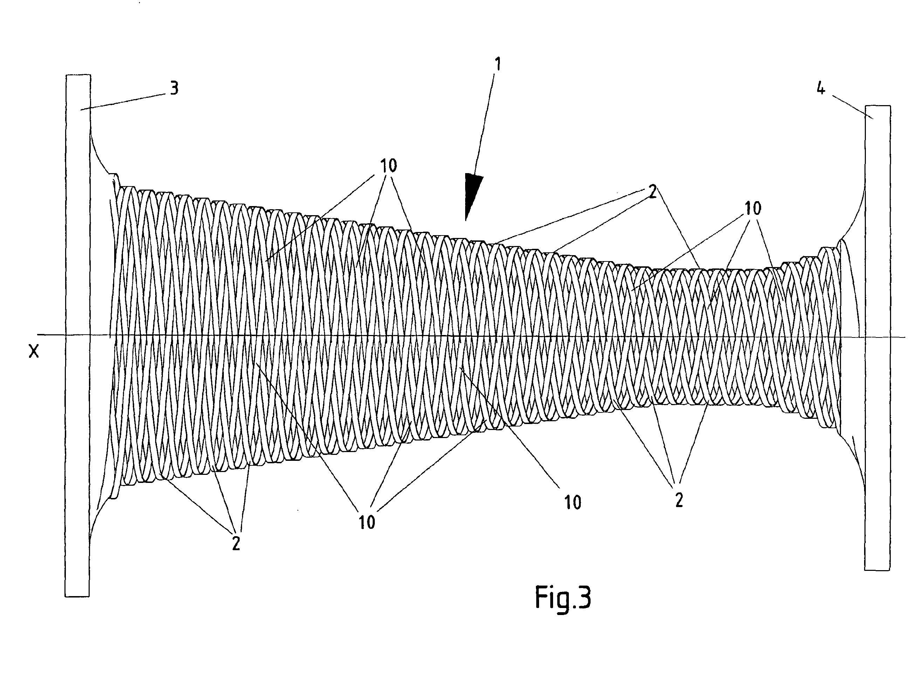

In Fig.1 - 3 ist eine erfindungsgemäße Antriebswelle 1 gezeigt, die eine offene, flexible Struktur aufweist, indem ihre rohrförmige Wandung aus einer Anzahl von Faserbündeln 2 gebildet ist. Die Welle 1 weist an ihren beiden Enden Anschlussstücke 3, 4 auf, die beispielsweise aus Metallteilen wie Ringen gebildet sind, die mit den Enden der Faserbündel 2 verbunden sind. Die Anschlusstücke 3, 4 können aber auch aus den Faserbündeln 2 selbst gebildet sein, die dann etwa mit entsprechenden, ringförmigen Metalleinsätzen 5, bspw. Metallringen, versehen sind, über welche dann die Befestigung der Antriebswelle 1 an einer nicht dargestellten Restmechanik, etwa einem Motor, Getriebe, Rad, etc. erfolgt.

Die Faserbündel 2 verlaufen dabei in einem Abstand um die Längsachse X herum in Bahnen, wobei diese Bahnen unter einem Winkel zu der Längsachse X der Welle 1 angeordnet sind. Die Bahnen können jeweils in sich geschlossen sein, sodass diese eine elliptische, gedachte Fläche begrenzen, oder es können Faserbahnen spiralförmig angeordnet sein und beispielsweise durchgehend von einem Ende bis zum anderen Ende der Welle verlaufen.

Grundsätzlich ist es aber auch möglich, dass ein Teil der Faserbündel 2 in sich geschlossen verläuft, während ein anderer Teil der Faserbündel spiralförmig verläuft.

Zusätzlich zu den quer verlaufenden Faserbündeln kann es auch noch zweckmäßig sein, wenn in der Zeichnung nicht dargestellte ring- bzw. kreisförmige Faserbündel vorgesehen sind, d. h. Bündel, die in sich geschlossen sind und einen kreisförmigen Querschnitt aufweisen. Auf diese Weise kann man die Längssteifigkeit der Welle punktuell erhöhen.

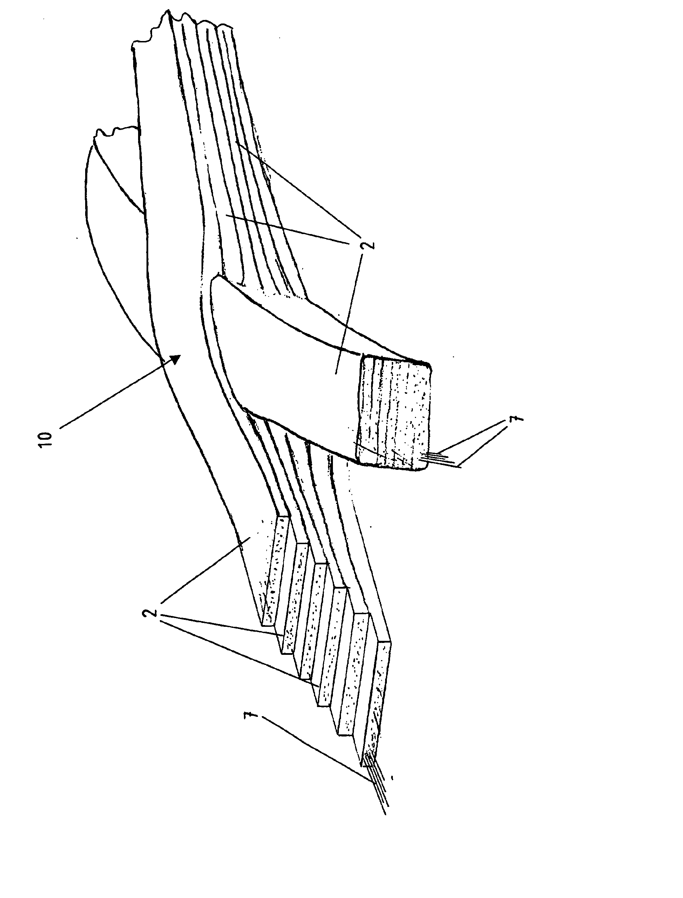

In Fig. 1 - 3 ist lediglich eine Schicht von Faserbündeln gezeigt. Wie der detaillierteren Fig. 4 zu entnehmen ist, verlaufen die Bahnen aber in der Regel in mehreren übereinanderliegenden Schichten, um auf diese Weise der Welle die notwendige Festigkeit und Stabilität zu geben.

Die Anzahl der Schichten ist dabei von den Belastungen, denen die Welle standhalten muss, abhängig. Typische Werte für die Anzahl solcher Schichten liegen bei typischerweise etwa 10-10³, wobei diese Werte aber belastungsabhängig sind und auch andere Werte möglich sind.

Wie der Zeichnung zu entnehmen ist und oben bereits angesprochen wurde, verlaufen die Faserbündel 2 unter einem Winkel zu der Längsachse X der Welle 1. Verschiedene, auch gleichgerichtete Faserbündel können dabei unter im wesentlichen gleichen Winkeln zu der Längsachse der Welle verlaufen. Es ist aber auch denkbar, dass sich diese Winkel - unabhängig davon, ob es sich um geschlossene oder spiralförmige Faserbündel handelt - über die Länge der Welle 1 bei einem Fortschreiten entlang eines Bündels 2 variieren.

Es kann weiters auch vorgesehen sein, dass bei Faserbündel, die über die gesamte Länge der Welle verlaufen, der Winkel zu der Längsachse X sich bei einem Fortschreiten entlang des Bündels 2 verändert.

Typische Werte für die Winkel, unter denen die Faserbündel gegen die Längsachse der Welle verlaufen, liegen in einem Bereich von 40°-80°.

Weiters weisen die Faserbündel 2 unterschiedliche Umlaufrichtungen um die Längsachse bzw. auf der Wandung auf, sodass sich gegenläufige Faserbündel in einem Bereich, dem sogenannten "Kreuzungspunkt" 10, überschneiden. In diesen Kreuzungspunkten 10 sind die Faserbündel - vorausgesetzt, sie weisen den gleichen Radialabstand zu der Längsachse X auf, fest miteinander verbunden, wie weiter unten noch im Detail erläutert wird.

Benachbarte Bahnen mit gleichem Umlaufsinn sind weiters in einer Richtung parallel zu der Längsachse X in einem Abstand zueinander angeordnet. Benachbarte Bahnen sind dabei in einem Abstand zueinander angeordnet, wie der Zeichnung zu entnehmen ist. Je größer dabei der Abstand ist, umso mehr Federweg kann die Welle in Längsrichtung aufnehmen. Typische Werte für den Abstand zweier benachbarter Bahnen liegen etwa zwischen 2mm - 20mm. Über den Winkel der Faserbündel, die Anzahl der Fasern und/oder Faserbündel sowie den Abstand zwischen benachbarten Bahnen können Steifigkeiten, Federweg, etc. der Welle bestimmt werden.

Durch den Abstand der benachbarten Bahnen ergibt sich eine offene, inhomogene Struktur der Welle 1, die es im Gegensatz zu flexiblen, homogenen Wellen, wie sie hinlänglich bekannt sind, erlaubt, den Innendurchmesser der Welle relativ beliebig zu gestalten, ohne dass dadurch die Flexibilität der Welle beeinträchtigt wird. Bei der erfindungsgemäßen Welle kann somit der Innendurchmesser relativ groß gewählt werden, sodass hohe Drehmomente übertragen werden können. Auch kann der Durchmesser der Welle so groß gewählt werden, dass beispielsweise durch die flexible Hohlwelle eine Radsatzwelle eines Schienenfahrzeuges durchgeführt werden kann. Trotzdem wird durch diesen großen Innendurchmesser die Flexibilität der Welle aufgrund ihrer offenen Struktur nicht eingeschränkt.

Bei einer spiralförmigen Anordnung der Faserbündel können diese von einem Ende der Welle bis zum anderen Ende durchlaufend ausgebildet sein. Die einzelnen Fasern in den Bündel können sich dabei ebenfalls über diese gesamte Länge erstrecken, es können aber auch kürzere Fasern, beispielsweise in einer Größenordnung von rund einem halben Meter, verwendet werden, wobei dann einzelne Fasern so miteinander verbunden - beispielsweise verklebt - werden, dass sie sich durchgehend über die gesamte Länge des Faserbündels erstrecken.

Die einzelnen Faserbündel haben in der Regel einen relativ hohen Faseranteil in der Größenordnung von etwa 90%, und die Fasern sind im wesentlichen in Richtung der Ausrichtung des Faserbündels verlegt. Bei den restlichen 10% handelt es sich um Harz, mit dem die Fasern zu Bündeln verklebt sind und die Bündel in den Kreuzungspunkten miteinander verklebt sind. Grundsätzlich sind aber auch Mischungsverhältnisse für Faser/Harz in einem Bereich von 70 %/30 % - 98 %/2 % möglich.

Damit die Welle 1 eine "feste" Struktur erhält, müssen die Faserbündel 2 miteinander verbunden sein. Dazu werden in den Kreuzungspunkten 10 die Faserbündel 2 fest miteinander verbunden, beispielsweise indem sie miteinander verklebt sind. Die Verklebung erfolgt dabei beispielsweise mit einem Harz miteinander. Auf die Welle wirkende Zug- und Druckkräfte werden in diesen Verbindungspunkten von der Verklebung, beispielsweise dem Harz, aufgenommen, sodass die Belastung auf die Faserbündel 2 selbst gering bleibt.

Die Faserbündel 2 kreuzen sich in den Verbindungspunkten 10 unter bestimmten Winkeln. Als günstig in Hinblick auf die Steifigkeit und elastische Eigenschaften der Welle hat sich dabei herausgestellt, wenn diese Winkel in einem Bereich von 10 ° - 90 ° liegen. Wie man insbesondere aus der Fig. 4 gut erkennen kann, sind in den Kreuzungspunkten eine ganze Reihe von Faserbündeln miteinander verbunden. Dabei handelt es sich - entgegen der Darstellung, in der nur einige wenige Bündel gezeigt sind -, üblicherweise um 10¹- 10³ solcher Faserbündel, die in Schichten angeordnet und in den Kreuzungspunkten miteinander verbunden sind, wodurch sich die auftretenden Belastungen in den Kreuzungspunkten entsprechend verteilen und so für eine hohe Stabilität und Festigkeit der Welle gesorgt ist.

Bei der angegebenen Zahl von 10¹-10³ Schichten handelt es sich dabei um einen typischen Richtwert, es können aber in speziellen Fällen und in Abhängigkeit von den verwendetet Werkstoffen, der geforderten Festigkeit, etc. auch mehr oder weniger Schichten vorgesehen sein.

Die Faserbündel 2 bestehen aus einer Vielzahl an Fasern 7. Diese Fasern 7 können zu einem Bündel 2 miteinander verklebt sein. Besonders hohe Belastungen können von der Welle 1 aufgenommen werden, wenn die Fasern 7 zu einem Faserbündel 2 verflochten sind. Die Fasern können aber auch lediglich eine parallele Anordnung aufweisen.

Die Faserbündel werden aus den Fasern gebildet, welche dann beispielsweise auf eine entsprechende Form der Welle aufgewickelt werden. Die Fasern und Bündel werden dann in Harz getränkt und anschließend lässt man diese Verbindung aushärten. Dadurch entstehen einerseits die Bündel aus den einzelnen Fasern, andererseits werden die Bündel auch in den Kreuzungspunkten miteinander verklebt.

Die Welle kann einen über ihre gesamte Länge im wesentlichen konstanten Innendurchmesser aufweisen. Von Vorteil ist es allerdings, wenn die Welle wie in der Figur dargestellt, einen ausgehend von einem Ende zum anderen Ende hin sich trichterförmig oder auch gleichförmig vergrößernden Durchmesser aufweist. Dies ist vor allem dann günstig, wenn die Welle auf einer Radsatzwelle aufgefädelt ist, da dann Bewegungen der Radsatzwelle an ihrem einen Ende durch die Welle nicht behindert werden.

Bei den Fasern selbst handelt es sich beispielsweise um Carbonfaser, Glasfasern, Kevlarfasern oder Metallfasern; auch Mischungen aus diesen Faserarten sind denkbar. Die einzelnen Faserbündel bestehen aus einer großen Anzahl von einzelnen Fasern, wobei die Anzahl der Fasern typischerweise in einem Bereich von 10²-10⁵ liegt. Wie schon erwähnt, liegen hängen diese Werte von den gewünschten Eigenschaften der Welle sowie den verwendeten Fasern ab, sodass auch andere Zahlenwerte durchaus möglich sind.

Zum Schutz der Fasern vor Beschädigung, etwa durch Steinschlag etc., ist in der Regel noch eine flexible Verkleidung für die Welle vorgesehen. Diese besteht beispielsweise aus einem Gummiüberzug, der die Flexibilität der Welle nicht beeinflusst, die Faserbündeln aber schützt. Zusätzlich werden dadurch Geräuschentwicklungen stark unterdrückt, welche sonst durch die offene Faserstruktur der Welle insbesondere bei hohen Rotationsgeschwindigkeiten der Welle 1 auftreten können.

## Patentansprüche

1. Antriebswelle zur Übertragung von Drehmomenten zwischen zwei Orten, deren Relativstellung sich in gewissen Grenzen ändern kann, wobei die Welle als flexible Hohlwelle mit einer rohrförmigen Wandung ausgebildet ist, wobei die rohrförmige Wandung aus Faserbündeln (2) gebildet ist, welche in Bahnen verlaufen, die in einem Abstand um die Längsachse (X) der Welle (1) herum verlaufen, wobei die Bahnen unter einem Winkel gegen die Längsachse (X) geneigt sind, benachbarte Bahnen mit gleichem Umlaufsinn in einer im wesentlichen zu der Längsachse (X) parallelen Richtung einen Abstand zueinander aufweisen, und sich Bahnen mit verschiedenem Umlaufsinn in Kreuzungspunkten (10) überschneiden, und mit offenen Zwischenräumen zwischen den Bahnen der Faserbündeln (2), wobei die Faserbündeln in den Kreuzungspunkten fest miteinander verbunden sind,
**dadurch gekennzeichnet, dass**
eine Bahn von Faserbündeln aus in mehreren übereinander angeordneten Schichten verlaufenden Faserbündeln (2) besteht, und sich die Faserbündel (2) verschiedener Schichten von verschiedenen Bahnen in den Kreuzungspunkten durchdringen.

2. Antriebswelle nach Anspruch 1, **dadurch gekennzeichnet, dass** der Winkel zu der Längsachse (X) bei einem Fortschreiten entlang der Bahnen unterschiedliche Werte aufweist.

3. Antriebswelle nach Anspruch 2, **dadurch gekennzeichnet, dass** die Bahnen der Faserbündel (2) unter einem Winkel von 40°-80° gegen die Längsachse (X) der Welle (1) verlaufen.

4. Antriebswelle nach einem der Ansprüche 1 bis 3, **dadurch gekennzeichnet, dass** für unterschiedliche Positionen entlang der Längsachse (X) die Abstände zwischen benachbarten Bahnen unterschiedliche Werte annehmen.

5. Antriebswelle nach einem der Ansprüche 1 bis 4, **dadurch gekennzeichnet, dass** die Faserbündel (2) im wesentlichen spiralförmig verlaufen.

6. Antriebswelle nach einem der Ansprüche 1 bis 4, **dadurch gekennzeichnet, dass** die Faserbündel (2) in sich geschlossen sind.

7. Antriebswelle nach einem der Ansprüche 1 bis 5, **dadurch gekennzeichnet, dass** die Faserbündeln (2) durchgehend von einem zum anderen Ende der Welle (1) verlaufen.

8. Antriebswelle nach einem der Ansprüche 1 bis 7, **dadurch gekennzeichnet, dass** die Faserbündel (2) in den Kreuzungspunkten (10) miteinander verklebt sind.

9. Antriebswelle nach Anspruch 8, **dadurch gekennzeichnet, dass** die Faserbündel (2) mit einem Harz miteinander verklebt sind.

10. Antriebswelle nach einem der Ansprüche 1 bis 9, **dadurch gekennzeichnet, dass** sich in den Kreuzungspunkten (10) kreuzende Faserbündel (2) unter einem Winkel von 10° - 90° überschneiden.

11. Antriebswelle nach einem der Ansprüche 1 bis 10, **dadurch gekennzeichnet, dass** sie zumindest zu einem Ende hin verlaufend einen sich vergrößernden Durchmesser aufweist.

12. Antriebswelle nach einem der Ansprüche 1 bis 11, **dadurch gekennzeichnet, dass** ringförmige Faserbündel vorgesehen sind.

13. Antriebswelle nach einem der Ansprüche 1 bis 12, **dadurch gekennzeichnet, dass** die Faserbündel (2) in den beiden Endbereichen der Welle (1) mit je einem Anschlussstück (3, 4) zur Verbindung mit einer Restmechanik verbunden sind.

14. Antriebswelle nach Anspruch 13, **dadurch gekennzeichnet, dass** die Anschlusstücke (3, 4) als Metallringe ausgebildet sind.

15. Antriebswelle nach Anspruch 13 oder 14, **dadurch gekennzeichnet, dass** die Anschlussstücke (3, 4) mit den Fasernbündeln (2) verklebt sind.

16. Antriebswelle nach einem der Ansprüche 1 bis 15, **dadurch gekennzeichnet, dass** die Faserbündel (2) aus Carbonfasern und/oder Glasfasern und/oder Kevlarfasern gebildet sind.

17. Antriebswelle nach einem der Ansprüche 1 bis 16, **dadurch gekennzeichnet, dass** die Fasernbündel (2) aus 10²-10⁵ Fasern (7) gebildet sind.

18. Antriebswelle nach einem der Ansprüche 1 bis 17, **gekennzeichnet durch** 10¹-10³ Schichten.

19. Antriebswelle nach einem der Ansprüche 1 bis 18, **dadurch gekennzeichnet, dass** sie zumindest bereichsweise von einer flexiblen Verkleidung umgeben ist, wobei die Verkleidung im wesentlichen die Gestalt der Welle besitzt.

20. Antriebswelle nach Anspruch 19, **dadurch gekennzeichnet, dass** die Verkleidung ein Gummiüberzug ist.

## Claims

1. A driving shaft for the transfer of torques from one point to another, the relative position of which points can vary within certain limits, which shaft is configured as a flexible hollow shaft having a tubular wall, said tubular wall being formed by fiber bundles (2) which extend along webs 1 surrounding the longitudinal axis (X) of the shaft (1) at a distance therefrom, said webs being inclined at an angle to the longitudinal axis (X) with adjacent webs wound in the same direction being equally spaced in a direction substantially parallel to the longitudinal axis (X), while webs wound in different directions intersect at points of intersection (10), there being open spaces between the webs formed by the fiber bundles (2), and the fiber bundles are firmly bonded to each other at the points of intersection,
**characterized in that**
a web of fiber bundles consists of a plurality of superimposed fiber bundles (2), and the fiber bundles (2) of different layers in different webs interpenetrate at the points of intersection.

2. The driving shaft as defined in claim 1, **characterized in that** the angle to the longitudinal axis (X) exhibits different values with progression along said webs.

3. The driving shaft as defined in claim 2, **characterized in that** the webs of said fiber bundles (2) extend at an angle of from 40 ° to 80 ° to the longitudinal axis (X) of said shaft (1).

4. The driving shaft as defined in any one of claims 1 to 3, **characterized in that** the spacing between adjacent webs assumes different values at different positions along the longitudinal axis (X).

5. The driving shaft as defined in any one of claims 1 to 4, **characterized in that** said fiber bundles (2) extend substantially spirally.

6. The driving shaft as defined in any one of claims 1 to 4, **characterized in that** said fiber bundles (2) form a closed structure.

7. The driving shaft as defined in any one of claims 1 to 5, **characterized in that** said fiber bundles (2) extend continuously from one end of said shaft (1) to the other.

8. The driving shaft as defined in any one of claims 1 to 7, **characterized in that** said fiber bundles (2) are bonded to each other at said points of intersection (10).

9. The driving shaft as defined in claim 8, **characterized in that** said fiber bundles (2) are bonded to each other by means of a resin.

10. The driving shaft as defined in any one of claims 1 to 9, **characterized in that** fiber bundles (2) crossing each other at said points of intersection (10) intersect at an angle of from 10 ° to 90 °.

11. The driving shaft as defined in any one of claims 1 to 10, **characterized in that** the diameter of said shaft increases toward at least one of its ends.

12. The driving shaft as defined in any one of claims 1 to 11, **characterized in that** annular fiber bundles are provided.

13. The driving shaft as defined in any one of claims 1 to 12, **characterized in that** said fiber bundles (2) are attached at both end regions of said shaft (1) to a connecting piece (3, 4) adapted to link with some other mechanism.

14. The driving shaft as defined in claim 13, **characterized in that** said connecting pieces (3, 4) are in the form of metal rings.

15. The driving shaft as defined in claim 13 or claim 14, **characterized in that** said connecting pieces (3, 4) are bonded to said fiber bundles (2).

16. The driving shaft as defined in any one of claims 1 to 15, **characterized in that** said fiber bundles (2) are formed from carbon fibers and/ or glass fibers and/ or Kevlar fibers.

17. The driving shaft as defined in any one of claims 1 to 16, **characterized in that** said fiber bundles (2) are formed from 10² to 10⁵ fibers (7).

18. The driving shaft as defined in any one of claims 1 to 17, **characterized by** 10¹ to 10³ layers.

19. The driving shaft as defined in any one of claims 1 to 18, **characterized in that** it is surrounded by a flexible sleeve at least in certain regions, which sleeve has substantially the same shape as the shaft.

20. The driving shaft as defined in claim 19, **characterized in that** said sleeve is a rubber covering.

## Revendications

1. Arbre de transmission pour la transmission de couples entre deux emplacements dont la position relative peut varier dans certaines limites, l'arbre étant réalisé en tant qu'arbre creux flexible avec une paroi tubulaire, la paroi tubulaire étant formée de faisceaux de fibres (2) s'étendant en rubans autour de l'axe longitudinal (X) de l'arbre (1) et à intervalle de celui-ci, les rubans étant inclinés suivant un angle par rapport à l'axe longitudinal (X), des rubans contigus avec le même sens de rotation étant espacés entre eux dans une direction sensiblement parallèle à l'axe longitudinal (X), et des rubans de sens de rotation différents se croisant à des points d'intersection (10), et avec des interstices ouverts entre les rubans de faisceaux de fibres (2), les faisceaux de fibres étant fixement reliés entre eux aux points d'intersection,
**caractérisé**
**en ce qu'**un ruban de faisceaux de fibres est composé de plusieurs faisceaux de fibres (2) s'étendant en plusieurs couches superposées, et en ce que les faisceaux de fibres (2) de différentes couches de différents rubans se traversent aux points d'intersection.

2. Arbre de transmission selon la revendication 1, **caractérisé en ce que** l'angle par rapport à l'axe longitudinal (X) présente des valeurs différenciées suivant la progression des rubans.

3. Arbre de transmission selon la revendication 2, **caractérisé en ce que** les rubans de faisceaux de fibres (2) sont inclinés suivant un angle compris entre 40 ° et 80 ° par rapport à l'axe longitudinal (X) de l'arbre (1).

4. Arbre de transmission selon l'une des revendications 1 à 3, **caractérisé en ce que** les espacements entre rubans contigus présentent des valeurs différenciées pour différentes positions le long de l'axe longitudinal (X).

5. Arbre de transmission selon l'une des revendications 1 à 4, **caractérisé en ce que** les faisceaux de fibres (2) s'étendent sensiblement en spirale.

6. Arbre de transmission selon l'une des revendications 1 à 4, **caractérisé en ce que** les faisceaux de fibres (2) se referment sur eux-mêmes.

7. Arbre de transmission selon l'une des revendications 1 à 5, **caractérisé en ce que** les faisceaux de fibres (2) s'étendent continument d'une extrémité à l'autre de l'arbre (1).

8. Arbre de transmission selon l'une des revendications 1 à 7, **caractérisé en ce que** les faisceaux de fibres (2) sont collés l'un à l'autre aux points d'intersection (10).

9. Arbre de transmission selon la revendication 8, **caractérisé en ce que** les faisceaux de fibres (2) sont collés l'un à l'autre par une résine.

10. Arbre de transmission selon l'une des revendications 1 à 9, **caractérisé en ce que** les faisceaux de fibres (2) se croisant aux points d'intersection (10) se recoupent suivant un angle compris entre 10 ° et 90 °.

11. Arbre de transmission selon l'une des revendications 1 à 10, **caractérisé en ce qu'**il présente un diamètre croissant vers au moins une de ses extrémités.

12. Arbre de transmission selon l'une des revendications 1 à 11, **caractérisé en ce que** des faisceaux de fibres de forme annulaire sont prévus.

13. Arbre de transmission selon l'une des revendications 1 à 12, **caractérisé en ce que**, dans les deux zones d'extrémité de l'arbre (1), les faisceaux de fibres (2) sont reliés à une pièce de raccord (3, 4) respective pour le raccordement à un mécanisme restant.

14. Arbre de transmission selon la revendication 13, **caractérisé en ce que** les pièces de raccord (3, 4) sont réalisées comme bagues métalliques.

15. Arbre de transmission selon la revendication 13 ou la revendication 14, **caractérisé en ce que** les pièces de raccord (3, 4) sont collées aux faisceaux de fibres (2).

16. Arbre de transmission selon l'une des revendications 1 à 15, **caractérisé en ce que** les faisceaux de fibres (2) sont formés de fibres de carbone et/ou de fibres de verre et/ou de fibres de kevlar.

17. Arbre de transmission selon l'une des revendications 1 à 16, **caractérisé en ce que** les faisceaux de fibres (2) sont formés de fibres (7) en nombre compris entre 10² et 10⁵.

18. Arbre de transmission selon l'une des revendications 1 à 17, **caractérisé par** 10¹ à 10³ couches.

19. Arbre de transmission selon l'une des revendications 1 à 18, **caractérisé en ce qu'**il gainé au moins partiellement d'un revêtement flexible, le revêtement ayant sensiblement la forme de l'arbre.

20. Arbre de transmission selon la revendication 19, **caractérisé en ce que** le revêtement est un revêtement en caoutchouc.
